# DEMANDE DE BREVET EUROPEEN

(11) **EP 1 445 236 A1**
(43) Date de publication de la demande: **11.08.2004**
(21) Numéro de dépôt: 03075349.5
(22) Date de dépôt: 05.02.2003
(51) Int. Cl.: C01B 31/02, B01J 4/00, B01J 12/02

(54) **Procédé et installation pour la fabrication de nanotubes de carbone**

(71) Demandeur: Université de Liège, 4020 Liège (BE)
(72) Inventeur: Bossuot, Christophe, c/o Université de Liège, 4000 Liège (BE); Pirard, Jean-Paul, c/o Université de Liège, 4000 Liège (BE); Kreit, Patrick, c/o Université de Liège, 4000 Liège (BE)

(57) **Abrégé**

Procédé pour la fabrication de nanotubes de carbone par décomposition thermique d'au moins un hydrocarbure gazeux (14) en présence d'un catalyseur solide, dans un réacteur (4) dans lequel le catalyseur est introduit via un sas d'entrée (17) balayé par un gaz inerte (21, 22, 25, 26) et duquel les nanotubes de carbone sont soutirés via un sas de sortie (41) que l'on balaie avec un courant d'un gaz inerte (39, 40).

## Description

L'invention concerne la fabrication de nanotubes de carbone.

Les nanotubes de carbone sont bien connus en technique. Ils consistent, d'une manière générale, en filaments tubulaires extrêmement fins, constitués de carbone pur. Leur diamètre est de quelques nanomètres et leur longueur peut atteindre plusieurs centaines de nanomètres, voire avoisiner et même excéder le micron.

Il existe à l'heure actuelle trois principales méthodes de synthèses des nanotubes de carbone : la méthode d'ablation laser de carbone, l'émission d'un arc électrique sur une électrode de graphite et la décomposition chimique d'un hydrocarbure en phase vapeur, aussi appelée procédé CCVD (le sigle CCVD étant dérivé de l'appellation anglo-saxonne « Catalyst Chemical Vapor Decomposition »).

Le procédé de synthèse CCVD présente l'avantage d'être peu coûteux et de produire des nanotubes avec des rendements en carbone satisfaisants. Selon ce procédé connu, on décompose un hydrocarbure (par exemple de l'éthylène) à l'état gazeux à haute température (de l'ordre de 600 à 800 °C), en présence d'un catalyseur et on recueille du réacteur de synthèse les nanotubes de carbone (éventuellement accompagnés de suie et d'impuretés), le catalyseur, de l'hydrogène, la fraction d'hydrocarbure qui n'a pas été décomposée et éventuellement des hydrocarbures plus lourds (par exemple de l'éthane dans le cas où l'hydrocarbure soumis à la décomposition catalytique est de l'éthylène) et des composés odorants.

Dans le procédé CCVD, il est indispensable d'éviter la présence d'air dans le réacteur de synthèse, pour éviter la formation de mélanges détonants avec l'hydrocarbure ou l'hydrogène produit. De ce fait, à l'heure actuelle ce procédé connu est effectué de manière essentiellement discontinue, des purges étant nécessaires pour mettre le réacteur sous atmosphère inerte et le catalyseur et l'hydrocarbure étant introduits dans celui-ci au moyen de gaz porteurs inertes. L'usage d'un procédé discontinu constitue un inconvénient et nuit à la productivité du réacteur de synthèse.

Dans un mode de réalisation connu du procédé CCVD, on met en oeuvre un réacteur tubulaire dont l'extrémité d'aval est ouverte pour permettre l'enfournement des supports du catalyseur (appelés barquettes et se présentant sous forme de demi-cylindres dont le diamètre est légèrement inférieur à celui du réacteur tubulaire) et le défournement des produits de la synthèse. Ce mode d'exécution connu du procédé CCVD implique les opérations suivantes dans l'ordre d'exécution :
- Mise de l'installation sous atmosphère inerte ;
- Ouverture du réacteur pour y enfourner une barquette contenant du catalyseur frais ;
- Mise de l'installation sous atmosphère inerte ;
- Alimentation du réacteur avec l'hydrocarbure dans un gaz inerte ;
- Mise de l'installation sous atmosphère inerte ;
- Défournement de la barquette avec le catalyseur et le produit brut de la synthèse.

Ce mode de réalisation connu du procédé CCVD présente notamment l'inconvénient d'enfourner le catalyseur frais sous gaz inerte à la température élevée de réaction alors que les catalyseurs utilisés se désactivent dans ces conditions. La désactivation du catalyseur est d'autant plus importante que le temps nécessaire pour purger l'installation et la mettre sous atmosphère inerte est long, après y avoir introduit le catalyseur frais.

Pour réduire l'importance de cette désactivation du catalyseur, il a été proposé d'augmenter la longueur du réacteur de synthèse, de telle sorte que celui-ci présente une partie d'amont logée dans un four et une partie d'aval dans l'air ambiant. L'hydrocarbure et son gaz porteur sont introduits dans la partie d'amont du réacteur et le catalyseur frais est introduit dans la partie d'aval du réacteur. De cette manière, le gaz réactionnel se refroidit dans la partie d'aval du réacteur et arrive à la température ambiante à la moitié du réacteur. Dans ce cas, on peut ouvrir le réacteur sous atmosphère réactionnelle sans risques exagérés pour défourner la barquette chargée de produit brut de synthèse et enfourner une autre barquette avec du catalyseur frais. Cette variante connue du procédé CCVD présente l'avantage d'être plus rapide car les purges de gaz inerte ne sont plus nécessaires. Elle présente toutefois un danger non négligeable d'explosion, du fait que des quantités non négligeables d'hydrocarbure et d'hydrogène sont mises en contact avec l'air ambiant. De plus, on n'évite pas une désactivation partielle du catalyseur au contact des gaz de la réaction avant d'atteindre la température de réaction. En outre, du fait de l'inertie thermique de l'ensemble barquette/catalyseur, le catalyseur met un temps non négligeable à atteindre la température de réaction, après son introduction dans la partie chaude du réacteur, ce qui accroît davantage encore sa désactivation prématurée.

L'invention vise à remédier aux inconvénients précités des modes opératoires connus du procédé CCVD, en fournissant un procédé nouveau qui présente l'avantage de pouvoir être mis en oeuvre de manière continue, permet des rendements plus élevés et évite tout risque d'explosion.

En conséquence, l'invention concerne un procédé pour la fabrication de nanotubes de carbone par décomposition thermique d'au moins un hydrocarbure gazeux en présence d'un catalyseur solide dans un réacteur, le procédé se caractérisant en ce qu'on introduit le catalyseur dans le réacteur via un sas d'entrée maintenu sous une atmosphère inerte et on soutire les nanotubes de carbone du réacteur via un sas de sortie que l'on balaie avec un courant d'un gaz inerte.

Le procédé selon l'invention est fondé sur la décomposition catalytique d'un hydrocarbure en carbone et en hydrogène. La synthèse est effectuée à haute température, en présence d'un catalyseur approprié pour que le carbone soit synthétisé à l'état de cristaux de graphite et présente la morphologie de nanotubes.

Les nanotubes de carbone obtenus au moyen du procédé selon l'invention sont des filaments tubulaires extrêmement fins, constitués de carbone graphitique pur et sont aussi ordonnés que des cristaux. Leurs diamètres externe et interne sont de quelques nanomètres (par exemple situés entre 4 à 50 nm pour le diamètre externe et entre 1 et 30 nm pour le diamètre interne) et leur longueur peut atteindre plusieurs centaines de nanomètres, voire plusieurs microns. Le filament est généralement formé d'une feuille de graphite, enroulée sur elle-même selon une spirale hélicoïdale. Selon les conditions opératoires mises en oeuvre au cours de la synthèse, on distingue les nanotubes monoparoi (dans lesquels la feuille spirale hélicoïdale formant la paroi du filament comporte une seule spire), et les nanotubes multiparois (dans lesquels la feuille spirale hélicoïdale comporte plusieurs spires, de sorte que le nanotube comprend alors plusieurs cylindres creux enfilés les uns dans les autres). Le diamètre interne des nanotubes dépend de divers facteurs, en particulier des conditions opératoires (température et pression), ainsi que du catalyseur et de l'hydrocarbure sélectionnés. Davantage d'informations sur les nanotubes de carbone sont accessibles dans la littérature technique, notamment dans l'article intitulé « Helical microtubes of graphitic carbon » de T.W. Ebbesen & P.M. Ajayan - Nature, Vol. 354, 7 novembre 1991, pages 56-58, ainsi que dans l'article intitulé « Large-scale synthesis of carbon nanotubes » - Nature, Vol. 358, 16 juillet 1992, pages 220-222.

L'hydrocarbure est avantageusement sélectionné parmi les hydrocarbures aliphatiques. Il peut comprendre un hydrocarbure saturé, un hydrocarbure insaturé, un mélange d'hydrocarbures saturés, un mélange d'hydrocarbures insaturés ou un mélange d'au moins un hydrocarbure saturé avec au moins un hydrocarbure insaturé. Le méthane, l'éthylène et l'acétylène conviennent bien.

Dans le procédé selon l'invention, l'hydrocarbure est mis en oeuvre à l'état gazeux et il est décomposé par voie thermique en présence d'un catalyseur. La température optimale de décomposition thermique dépend de divers paramètres, en particulier de l'hydrocarbure mis en oeuvre, du catalyseur sélectionné et de la pression mise en oeuvre dans le réacteur de synthèse. Le choix de 1a température est en outre conditionné par la morphologie souhaitée pour les nanotubes de carbone, en particulier par leurs dimensions et selon que l'on souhaite obtenir des nanotubes monoparoi ou des nanotubes multiparois. La température optimale doit dès lors être déterminée dans chaque cas particulier, par exemple au moyen d'un travail de routine au laboratoire. En général, des températures situées entre 500 et 1000 °C (de préférence de 600 à 800 °C) conviennent bien dans la majorité des cas.

Le catalyseur a pour fonction de catalyser la décomposition de l'hydrocarbure en carbone et en hydrogène, le carbone étant produit à l'état graphitique avec la morphologie de nanotubes. Le catalyseur n'est pas critique pour l'exécution du procédé selon l'invention, tout catalyseur normalement utilisé dans le procédé connu CCVD pouvant convenir.

La forme du réacteur n'est pas critique. On utilise avantageusement un réacteur tubulaire sensiblement horizontal ou légèrement incliné sur l'horizontale. Le réacteur doit évidemment être réalisé en une matière susceptible de résister à la température, la pression et l'environnement chimique mis en oeuvre. On utilise avantageusement un réacteur en quartz.

Selon l'invention, pour introduire le catalyseur dans le réacteur, on le fait transiter dans un sas où l'on réalise une atmosphère gazeuse inerte. Pour ce faire, après introduction du catalyseur dans le sas, on le purge de l'air qu'il contient en le remplaçant par le gaz inerte. Cette purge a pour fonction d'éviter que de l'air pénètre dans le réacteur avec le catalyseur. L'atmosphère inerte est sélectionnée parmi les gaz qui ne sont pas susceptibles de réagir avec l'hydrocarbure dans le réacteur. L'argon, l'azote et l'hélium sont spécialement recommandés.

Un moyen préféré pour réaliser l'atmosphère inerte dans le sas d'entrée consiste, selon l'invention, à soumettre celui-ci à un balayage avec le gaz inerte.

Pour soutirer les nanotubes de carbone du réacteur, on les fait transiter dans un autre sas que l'on soumet à un balayage avec un courant de gaz inerte. Le balayage du sas a pour fonction d'entraîner les gaz issus de la réaction (hydrogène, excès d'hydrocarbure) hors du sas. Le gaz inerte qui est envoyé dans ce sas doit par conséquent être inerte vis-à-vis du carbone, vis-à-vis de l'hydrogène et vis-à-vis de l'hydrocarbure mis en oeuvre. L'argon, l'azote et l'hélium sont spécialement recommandés.

Dans une forme de réalisation particulière du procédé selon l'invention, on extrait une partie au moins du gaz de réaction hors du réacteur. Cette forme de réalisation de l'invention permet une analyse du gaz de réaction pour suivre la bonne marche du procédé.

Dans le procédé selon l'invention, on recommande que le chauffage du réacteur soit réalisé de manière à éviter un chauffage du sas pour l'admission du catalyseur et, de préférence, également du sas servant au soutirage des produits de la synthèse.

Dans le procédé selon l'invention, l'hydrocarbure peut être introduit tel quel dans le réacteur. En variante, on peut aussi l'introduire par l'intermédiaire d'un gaz porteur inerte. L'argon, l'azote, l'hélium et l'hydrogène sont des exemples de gaz porteurs utilisables dans cette variante de l'invention.

Le procédé selon l'invention présente la particularité que le catalyseur et l'hydrocarbure sont isolés de l'air ambiant au moment de leur introduction dans le réacteur. Il présente la particularité supplémentaire que les nanotubes de carbone sont d'abord isolés de l'air ambiant au moment où on les sort du réacteur et sont ensuite plongés dans une atmosphère inerte avant d'être mis en contact avec l'air ambiant. Ces particularités du procédé selon l'invention garantissent la sécurité des opérateurs et du réacteur en supprimant tout risque d'explosion.

Le procédé selon l'invention présente l'avantage d'éviter une surchauffe prématurée du catalyseur, avant son entrée dans la zone du réacteur où s'effectue la synthèse, évitant de la sorte une baisse de son activité catalytique. Il permet en outre d'introduire le catalyseur et l'hydrocarbure à l'endroit le plus approprié du réacteur pour réaliser une synthèse optimum et obtenir un produit de qualité optimum avec des rendements optimum à la fois au point de vue énergétique et au point de vue de l'utilisation des matières premières.

Le procédé selon l'invention présente la particularité avantageuse de ne plus imposer, comme c'était le cas avec le procédé antérieur, un fonctionnement discontinu alternant des étapes d'enfournements des matières premières et des étapes de défournement des produits de la synthèse, séparées par des phases de mise sous atmosphère inerte du réacteur.

En conséquence, selon une forme d'exécution préférée, le procédé selon l'invention est mis en oeuvre de manière continue. Dans cette forme d'exécution préférée du procédé selon l'invention, les matières premières (hydrocarbure et catalyseur) sont enfournées de manière continue en amont du réacteur et les produits de la synthèse (comprenant les nanotubes de carbone, de l'hydrogène et l'excédent d'hydrocarbure) sont défournés de manière continue en aval du réacteur, sans intervention sur l'atmosphère régnant dans le réacteur. Dans cette forme d'exécution du procédé selon l'invention, les expressions amont et aval sont définies par rapport au sens de circulation des matières premières et des produits de synthèse dans le réacteur. Cette forme d'exécution préférée du procédé selon l'invention permet une productivité maximum du réacteur, à un coût minimum.

L'invention concerne dès lors également une installation convenant pour la production continue de nanotubes de carbone au moyen du procédé selon l'invention. L'installation selon l'invention comprend un réacteur tubulaire incliné sur l'horizontale, un dispositif d'admission d'un réactif gazeux dans le réacteur, un dispositif d'enfournement d'un réactif pulvérulent dans le réacteur et un dispositif pour le soutirage d'une poudre hors du réacteur ; elle se caractérise en ce que le dispositif d'enfournement du réactif pulvérulent et le dispositif de soutirage comprennent chacun un sas qui est isolé par deux vannes et qui comprend deux raccords pour sa connexion à un circuit de gaz.

Dans l'installation selon l'invention, les sas ont pour fonction de maintenir le réacteur tubulaire isolé de l'atmosphère extérieure, pendant l'introduction des matières premières et le soutirage des produits de la synthèse.

Lorsque l'installation selon l'invention est utilisée pour l'exploitation du procédé selon l'invention, le dispositif d'admission de gaz sert à l'introduction de l'hydrocarbure dans le réacteur, le dispositif d'enfournement sert à l'introduction du catalyseur dans le réacteur, le dispositif de soutirage sert au soutirage des produits de la synthèse et les circuits de gaz des sas sont des circuits de gaz inerte.

Lorsqu'elle est destinée à l'exécution du procédé selon l'invention, l'installation selon l'invention comporte en outre un dispositif de chauffage du réacteur. Ce dispositif de chauffage n'est pas critique. Selon une forme de réalisation avantageuse de l'invention, le dispositif de chauffage consiste en un four dans lequel est logé le réacteur tubulaire. Le chauffage du four peut être réalisé par tout moyen adéquat, par exemple par la combustion d'un combustible fossile (avantageusement du gaz naturel) ou par énergie électrique.

Dans la forme de réalisation qui vient d'être décrite de l'installation selon l'invention, le réacteur tubulaire est avantageusement réalisé en quartz. Il est de préférence chemisé d'un cylindre métallique (par exemple en acier) destiné à renforcer sa résistance mécanique.

Dans une forme de réalisation préférée de l'installation selon l'invention, qui est bien adaptée à l'exécution du procédé selon l'invention, le réacteur est en communication avec un dispositif d'admission d'un gaz porteur de l'hydrocarbure.

Dans une autre forme de réalisation de l'installation selon l'invention, celle-ci comprend, dans la partie d'aval du réacteur, en amont du sas de sortie, une conduite pour l'évacuation d'une partie au moins des gaz de la réaction. Cette conduite d'évacuation est avantageusement reliée à un analyseur de gaz. Cet analyseur de gaz n'est pas critique en soi. Il comprend avantageusement un chromatographe en phase gazeuse couplé à un spectromètre de masse.

L'installation selon l'invention est avantageusement pilotée par un ordinateur.

Les nanotubes de carbone obtenus au moyen du procédé selon l'invention trouvent diverses applications, notamment dans la fabrication de circuits électroniques, pour le renforcement de matériaux ou encore pour le stockage de gaz.

Des particularités et détails de l'invention vont apparaître au cours de la description suivante des dessins annexé.
La figure 1 montre schématiquement, en section axiale verticale, une forme de réalisation particulière de l'installation selon l'invention ;
La figure 2 est une vue en élévation d'un élément constructif de l'installation de la figure 1 ;
La figure 3 montre l'élément constructif de la figure 2 en section transversale selon le plan III-III de la figure 2 ;
La figure 4 montre à plus grande échelle un détail de la figure 3.

Dans ces figures, des mêmes numéros de référence désignent des éléments identiques.

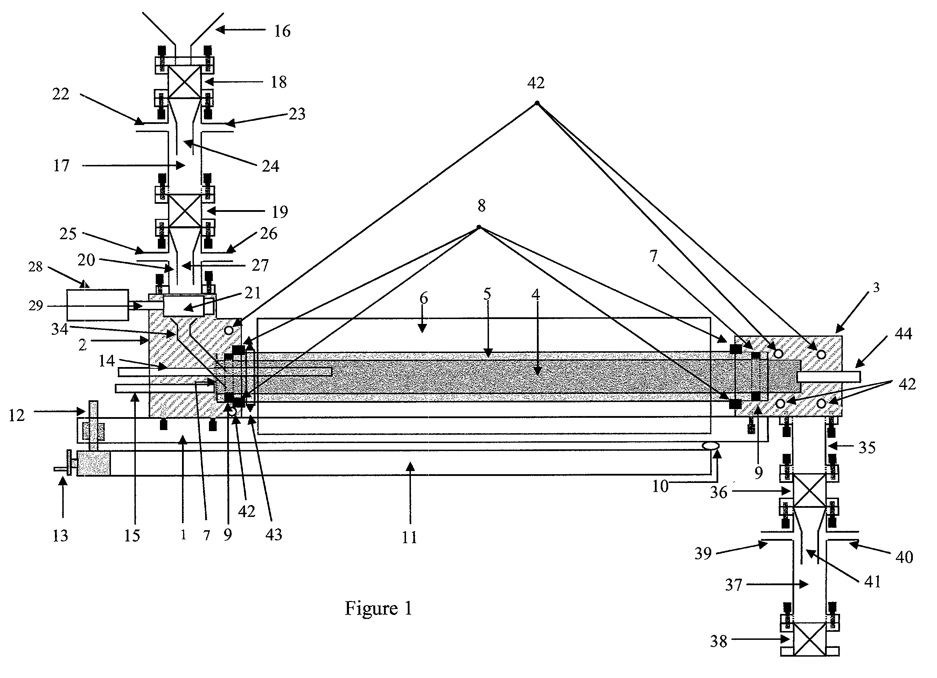

L'installation schématisée à la figure 1 comprend une poutre sensiblement horizontale 1 sur laquelle sont calés deux blocs métalliques 2 et 3 (par exemple en acier inoxydable). Les blocs 2 et 3 servent à supporter un réacteur tubulaire 4 en quartz, chemisé d'un cylindre 5 en acier inoxydable, à l'intérieur d'un four tubulaire 6. Le réacteur tubulaire 4 et sa chemise 5 sont supportés dans des cavités annulaires 7 des blocs 2 et 3, par des roulements 8. Des joints toriques 9 assurent l'étanchéité entre le réacteur 4 et 1a paroi des cavités 7.

La poutre 1 est articulée sur un galet 10 solidaire d'une poutre horizontale fixe 11. Une crémaillère 12 manoeuvrée par une manivelle 13, permet de régler l'inclinaison de la poutre 1 par rapport à l'horizontale.

Le bloc 2, situé en amont du réacteur 4, est traversé par un conduit 14 et un conduit 15 qui servent à introduire, dans le réacteur 4, respectivement un hydrocarbure à l'état gazeux et un gaz porteur.

Le bloc 2 supporte un ensemble d'éléments comprenant une trémie 16, un sas 17, deux vannes à boisseau 18 et 19, une enceinte 20 et un distributeur de poudre 21.

La trémie 16 est située sous un silo (non représenté) contenant un réactif solide pulvérulent. Elle débouche dans la vanne 18 formant l'extrémité d'amont du sas 17 dont l'extrémité d'aval comprend la vanne 19.

Le sas 17 se trouve en communication avec deux tubulures 22 et 23 destinées à le raccorder à un circuit de gaz inerte. Le sas 17 est tubulaire et contient un tube cylindrique 24 de plus petit diamètre, dont la fonction technique est d'éviter que la circulation du gaz inerte dans le sas 17 perturbe l'écoulement du réactif solide pulvérulent.

La vanne 19 débouche dans l'enceinte étanche 20 qui comporte deux tubulures 25 et 26 destinées à la raccorder à un circuit de gaz inerte. Le gaz inerte envoyé dans le sas 17 est de préférence le même que celui qui est envoyé dans l'enceinte 20.

L'enceinte 20 est tubulaire et contient un tube cylindrique 27, qui est similaire au tube cylindrique 24 du sas 17 et qui exerce la même fonction technique que lui.

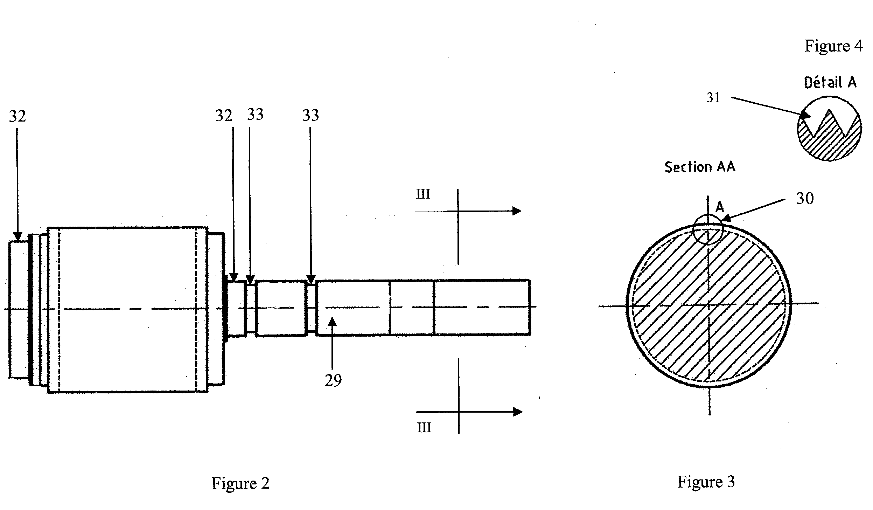

Le distributeur de poudre 21 est situé immédiatement sous l'enceinte 20 et est couplé à un moteur électrique 28. Le distributeur de poudre 21 (mieux représenté aux figures 2 et 3) comprend un arbre horizontal 29 dont une partie de la périphérie (désignée par la notation de référence 30 à la figure 3) a été fraisée pour y ménager une ou plusieurs auges 31 (figure 4). La longueur des auges 31 (dans le sens de l'axe de l'arbre 29) correspond sensiblement au diamètre de l'enceinte 20. Sous l'effet de la rotation de l'arbre 29, les compartiments 31 alternativement se remplissent de la poudre contenue dans l'enceinte 20 et déversent ensuite celle-ci, par gravité, dans un collecteur 34 ménagé dans le bloc 2.

L'arbre 29 comprend des butées 32 pour le calage de roulements (non représentés) et des rainures annulaires 33 destinées à contenir des joints toriques (non représentés) afin que la rotation de l'arbre 29 soit parfaitement étanche dans le bloc 2.

Le moteur 28 est du type à vitesse variable. Sa vitesse est réglée en fonction du débit recherché pour l'admission du réactif pulvérulent dans le réacteur 4.

Le collecteur 34 traverse le bloc d'amont 2 et débouche dans le réacteur 4.

Le bloc d'extrémité 3 supporte un ensemble étanche d'éléments, comprenant un réservoir 35, une vanne 36 du type à guillotine, un sas 37 et une seconde vanne 38 du type à guillotine. Le sas 37 se trouve en communication avec deux tubulures 39 et 40 destinées à le raccorder à un circuit de gaz inerte.

Le réservoir 35 est ouvert à sa partie supérieure et se trouve en communication avec l'extrémité d'aval du réacteur 4 par l'intermédiaire d'une canalisation (non représentée) ménagée à travers le bloc 3. En manoeuvrant les vannes 36 et 38, les produits fabriqués dans le réacteur 4 sont ainsi défournés de l'installation. Pour éviter que la circulation du gaz inerte dans le sas 37 perturbe l'écoulement des produits déchargés du réacteur 4, on donne au sas 37 un profil tubulaire et on dispose, dans sa partie supérieure, un tube cylindrique 41 de plus petit diamètre.

Le bloc d'extrémité 3 est par ailleurs percé d'un conduit 44 débouchant dans la zone d'aval du réacteur 4. Ce conduit 44 est destiné à extraire une partie au moins des gaz du réacteur 4, pour les envoyer vers un analyseur de gaz non représenté. L'analyseur de gaz n'est pas critique. Il peut par exemple comprendre un chromatographe en phase gazeuse couplé à un spectromètre de masse.

Les blocs d'amont 2 et d'aval 3 sont parcourus chacun par un circuit interne de canalisations 42, destinées à la circulation d'un fluide de refroidissement, généralement de l'eau.

Une couronne dentée 43 est calée sur la chemise métallique 5 du réacteur 4 et couplée mécaniquement à l'arbre d'un moteur électrique (non représenté), de manière à soumettre le réacteur 4 à une rotation lente et régulière.

Pour fabriquer des nanotubes de carbone au moyen de l'installation représentée aux figures, on chauffe le four 6 de manière adéquate pour réaliser dans le réacteur 4 la température de réaction qui convient pour la décomposition catalytique de l'hydrocarbure. L'eau de refroidissement circulant dans les canalisations 42 garantit le maintient des blocs d'amont 2 et d'aval 3 à une température compatible avec leur bonne tenue mécanique.

Les sas 17 et 37 et l'enceinte 20 sont par ailleurs soumis à un balayage permanent avec un gaz inerte, par exemple de l'argon, par l'intermédiaire des tubulures 22 et 23, 39 et 40, 25 et 26 respectivement.

On déverse un catalyseur en poudre dans la trémie 16 et on ouvre la vanne 18, la vanne 19 étant obturée. Après remplissage du sas 17, on obture la vanne 18 et on ouvre la vanne 19 pour transférer le catalyseur du sas 17 dans l'enceinte 20 via le conduit cylindrique 27. Après avoir obturé la vanne 18 et pendant que le sas 17 se vide de la poudre catalytique qu'il contient, on introduit une nouvelle charge de catalyseur dans la trémie 16. Dès que le sas 17 est vide, on obture la vanne 19, on rouvre la vanne 18 et on répète le cycle des opérations qui viennent d'être décrites.

Le catalyseur en poudre contenu dans l'enceinte 20 s'écoule par gravité et de manière continue vers le réacteur 4 à travers le collecteur 34. Son débit est contrôlé par le distributeur 21. Le réacteur 4 étant légèrement incliné de l'amont (bloc 2) vers l'aval (bloc 3) et étant par ailleurs soumis à une rotation lente et continue autour de son axe longitudinal, le catalyseur en poudre s'y écoule progressivement vers le bloc 3.

Par ailleurs, on introduit de manière continue dans le réacteur 4, d'une part un hydrocarbure (par exemple du méthane) via le conduit 14 et, d'autre part, un gaz porteur (par exemple de l'argon, de l'azote, de l'hélium ou de l'hydrogène) via le conduit 15. Dans le four 4, on réalise une température d'environ 600 à 800°C, de manière à décomposer l'hydrocarbure en carbone et hydrogène. Au contact du catalyseur, le carbone cristallise en formant des nanotubes de graphite. Les produits de la réaction s'écoulent vers l'extrémité d'aval du réacteur 4 et passent dans le réservoir 35. Le sas 37 se trouvant sous atmosphère d'argon, on ouvre sa vanne 36 pour y transférer les produits du réservoir 35. Le balayage du sas 37 avec le courant de gaz inerte (par l'intermédiaire des tubulures 39 et 40) a pour effet d'éliminer sensiblement la totalité de l'hydrogène et des hydrocarbures contenus dans le sas 37.

On ouvre la vanne 38 pour recueillir les nanotubes de carbone. On recueille par ailleurs le courant de gaz sortant de la conduite 44 et on le transfert vers un analyseur, non représenté, par exemple un chromatographe en phase gazeuse couplé à un spectromètre de masse.

Pendant l'exploitation de l'installation représentée aux figures, on peut déplacer axialement les conduits 14 et 15 d'admission de gaz, de manière à délivrer ceux-ci dans la zone du four où règne la température la plus appropriée pour la synthèse des nanotubes de carbone.

L'intérêt de l'invention va apparaître au cours de la description des exemples suivants.

### Première série d'exemples (conformes à l'invention).

Les exemples 1 à 3 dont la description suit ont trait à des essais de synthèse de nanotubes de carbone, qui ont été effectués conformément au procédé selon l'invention, dans une installation similaire à celle représentée aux figures 1 à 4.

### Exemple 1.

Dans cet exemple, on a disposé dans le réacteur un lit de 0,09 g de catalyseur par cm de longueur du réacteur tubulaire et on a soumis le réacteur à une rotation continue de 2 tours/min. On a alimenté le réacteur avec un catalyseur en poudre et l'hydrocarbure choisi a consisté en de l'éthylène dilué dans un gaz porteur à raison de 0,33 mole/1.

On a utilisé un débit de catalyseur de 0,006 g/s et un débit de gaz (gaz porteur chargé de l'éthylène) de 3 N1/min.

On a obtenu une production de 32 g de nanotubes de carbone par heure, avec un rendement de 4,5 g de carbone par g de catalyseur.

### Exemple 2.

On a répété l'essai de l'exemple 1, dans les conditions suivantes :
Epaisseur du lit de catalyseur : 0,22 g/cm ;
Vitesse de rotation du réacteur : 2 tours/min ;
Titre molaire de l'éthylène dans le gaz porteur : 0,50 ;
Débit de catalyseur : 0,015 g/s ;
Débit de gaz : 3 Nl/min.

On a obtenu les résultats suivants :
Production : 48 g/h ;
Rendement : 4,9 g de carbone par g de catalyseur.

### Exemple 3.

On a répété l'essai de l'exemple 1, dans les conditions suivantes :
Epaisseur du lit de catalyseur : 0,04 g/cm ;
Vitesse de rotation du réacteur : 2 tours/min ;
Titre molaire de l'éthylène dans le gaz porteur : 0,33 ;
Débit de catalyseur : 0,003 g/s ;
Débit de gaz : 3 Nl/min.

On a obtenu les résultats suivants :
Production : 32 g/h ;
Rendement : 3,8 g de carbone par g de catalyseur.

### Seconde série d'exemples (non conformes à l'invention).

Les exemples 4 à 6 dont la description suit ont été effectués conformément au mode discontinu connu du procédé CCVD. Dans ces exemples, on a utilisé le même catalyseur que dans la première série d'exemples 1 à 3.

### Exemple 4.

Dans cet exemple, on a réalisé dans un réacteur tubulaire horizontal un lit permanent de catalyseur de 2,0 g réparti sur une longueur de 20 cm.

L'hydrocarbure choisi a consisté en de l'éthylène dilué dans un gaz porteur à raison de 0,33 mole/1, comme dans la première série d'exemples. On a fait circuler ce gaz dans le réacteur pendant 20 minutes, au débit de 3 N1/min.

On a obtenu une production de 6,8 g de nanotubes de carbone par heure, avec un rendement de 1,7 g de carbone par g de catalyseur.

### Exemple 5.

On a répété l'essai de l'exemple 4, dans les conditions suivantes :
Longueur du lit permanent de catalyseur : 20 cm ;
Masse du lit permanent de catalyseur : 0,8 g ;
Titre molaire de l'éthylène dans le gaz porteur : 0,33 ;
Débit de gaz : 3 Nl/min ;
Durée de l'essai discontinu : 20 min.

On a obtenu les résultats suivants :
Production : 3,4 g/h ;
Rendement : 2,1 g de carbone par g de catalyseur.

### Exemple 6.

On a répété l'essai de l'exemple 4, dans les conditions suivantes :
Longueur du lit permanent de catalyseur : 20 cm ;
Masse du lit permanent de catalyseur : 1,6 g ;
Titre molaire de l'éthylène dans le gaz porteur : 0,33 ;
Débit de gaz : 3 Nl/min ;
Durée de l'essai discontinu : 20 min.

On a obtenu les résultats suivants :
Production : 7,4 g/h ;
Rendement : 2,3 g de carbone par g de catalyseur.

Une comparaison des résultats des exemples 1 à 3 (conformes à l'invention) avec ceux des exemples 4 à 6 (conforme au procédé discontinu antérieur à l'invention) fait immédiatement apparaître l'avantage de l'invention en ce qui concerne la productivité et le rendement de la synthèse des nanotubes de carbone.

## Revendications

1. Procédé pour la fabrication de nanotubes de carbone par décomposition thermique d'au moins un hydrocarbure gazeux en présence d'un catalyseur solide dans un réacteur, **caractérisé en ce qu'**on introduit le catalyseur dans le réacteur via un sas d'entrée maintenu sous une atmosphère inerte et on soutire les nanotubes de carbone du réacteur via un sas de sortie que l'on balaie avec un courant d'un gaz inerte.

2. Procédé selon la revendication 1, **caractérisé en ce que**, pour maintenir le sas d'entrée sous atmosphère inerte, on le soumet à un balayage avec un gaz inerte.

3. Procédé selon la revendication 1 ou 2, **caractérisé en ce qu'**on soumet le réacteur à un chauffage dont on isole les sas d'entrée et de sortie.

4. Procédé selon l'une quelconque des revendications 1 à 3, **caractérisé en ce qu'**on met en oeuvre un réacteur tubulaire que l'on incline sur l'horizontal entre le sas d'entrée et le sas de sortie et que l'on soumet à une rotation continue.

5. Procédé selon la revendication 3 ou 4, **caractérisé en ce qu'**on introduit l'hydrocarbure et le catalyseur séparément et de manière continue dans une zone du réacteur où on réalise une température optimum pour la décomposition de l'hydrocarbure.

6. Procédé selon l'une quelconque des revendications 1 à 5, **caractérisé en ce qu'**on introduit en outre de l'hydrogène et/ou un gaz inerte dans le réacteur.

7. Procédé selon l'une quelconque des revendications 1 à 6, **caractérisé en ce que** le gaz inerte est sélectionné parmi l'argon, l'azote et l'hélium.

8. Procédé selon l'une quelconque des revendications 1 à 7, **caractérisé en ce qu'**on sélectionne l'hydrocarbure parmi le méthane, l'éthylène et l'acétylène.

9. Installation pour la production de nanotubes de carbone au moyen du procédé conforme à l'une quelconque des revendications 1 à 8, comprenant un réacteur tubulaire incliné sur l'horizontale, un dispositif d'admission d'un réactif gazeux dans le réacteur, un dispositif d'enfournement d'un réactif pulvérulent dans le réacteur et un dispositif de soutirage d'une poudre hors du réacteur, **caractérisé en ce que** le dispositif d'enfournement du réactif pulvérulent et le dispositif de soutirage comprennent chacun un sas qui est isolé par deux vannes et qui comprend deux raccords pour sa connexion à un circuit de gaz.

10. Installation selon la revendication 9, **caractérisé en ce que** le dispositif d'admission du réactif gazeux et le dispositif d'enfournement du réactif pulvérulent débouchent au voisinage l'un de l'autre dans le réacteur.
